**Europäisches Patentamt**

**European Patent Office**

**Office européen des brevets**

(19)

(11) Veröffentlichungsnummer: **0 073 218 B1**

(12) **EUROPÄISCHE PATENTSCHRIFT**

(45) Veröffentlichungstag der Patentschrift:
**23.04.86**

(51) Int. Cl.⁴: **G 01 N 3/08**, G 01 N 33/38

(21) Anmeldenummer: **82900657.6**

(22) Anmeldetag: **23.02.82**

(86) Internationale Anmeldenummer:
**PCT/HU 82/00006**

(87) Internationale Veröffentlichungsnummer:
**WO 82/02949 (02.09.82** Gazette 82/21)

(54) **PRÜFEINRICHTUNG ZUR BESTIMMUNG DER FESTIGKEIT VON BETON.**

(30) Priorität: **23.02.81 HU 43281**

(43) Veröffentlichungstag der Anmeldung:
**09.03.83 Patentblatt 83/10**

(45) Bekanntmachung des Hinweises auf die Patenterteilung:
**23.04.86 Patentblatt 86/17**

(84) Benannte Vertragsstaaten:
**AT BE CH DE FR GB LI LU NL SE**

(56) Entgegenhaltungen:
**SU - A - 51 829**

**GOST 21243-75, Betony Opredelenije protschnosti metodom otrywa so skalywanijem, 1976 Isd. standartow, Moskau**
**B.G. Skramtajew, M.J. Letschinskij Ispytanije protschnosti betona w obrastasach isdelijach i soorus henijach, 1964, Isd. literatury po stroitelstwu,, Moskau, page 86-93**

(73) Patentinhaber: **MEHES, Ferenc, Báthori u. 24, H-1054 Budapest (HU)**
Patentinhaber: **MOZES, András, Kárpát u. 54, H-1133 Budapest (HU)**

(72) Erfinder: **MEHES, Ferenc, Báthori u. 24, H-1054 Budapest (HU)**
Erfinder: **MOZES, András, Kárpát u. 54, H-1133 Budapest (HU)**

(74) Vertreter: **Lemcke, Rupert, Dipl.-Ing., Patentanwälte Dipl.-Ing. R. Lemcke Dr.-Ing. H.J. Brommer Amalienstrasse 28 Postfach 4026, D-7500 Karlsruhe 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung geht aus von einer Einrichtung zur Bestimmung der Festigkeit von Beton mit einem auf die Betonoberfläche aufsetzbaren Gestell, einer Belastungseinheit für ein mittels eines Verbindungselementes mit der Belastungseinheit verbundenes, in den zu prüfenden, noch nicht erhärteten Beton einzusetzendes Einlegeelement, sowie mit einem Kraftmessorgan.

Im Beton- und Stahlbetonbau ist es erforderlich, die technischen Parameter, hauptsächlich die mechanischen Eigenschaften des erstarrten Betons unabhängig davon bestimmen zu können, ob vorgefertigte Konstruktionen oder Bauten aus Ortbeton angewendet werden. Im Betonbau ist es immer schon üblich, verschiedene Probestücke, z.B. Probewürfel, seltener speziell geformte Probestücke herzustellen, sie bis zum Bruch zu belasten und daraus dann auf die Festigkeit des Betons zu schliessen.

Diese Prüfungen bieten jedoch nur informatorische Ergebnisse, aus denen man nicht mit voller Sicherheit auf die tatsächlichen mechanischen Eigenschaften der eingebauten Konstruktionen folgern kann. Der erste und wichtigste Grund dafür ist, dass die Verarbeitungsbedingungen der Probestücke wesentlich von denen der tatsächlichen Konstruktion abweichen. Andererseits kann die Erstarrung der Probestücke eventuell auch unter ganz anderen Bedingungen vor sich gehen.

Erfahrungsgemäss zeigen die Probestücke ein erheblich günstigeres Bild von den Festigkeitseigenschaften des Betons als dies der Wirklichkeit entspricht. Daher versucht man schon seit Jahrzehnten, solche mechanische Prüfungen durchzuführen, bei denen die Proben aus dem tatsächlichen Beton entnommen und die daraus erhaltenen Bruchergebnisse ausgewertet werden.

Bei letzterem Verfahren werden aus bestimmten Stellen der fertigen Konstruktion Probestücke, z.B. Probewürfel, herausgeschnitten und bis zum Bruch belastet. Dieses Verfahren kann jedoch oft nicht angewendet werden. Dies einmal wegen der Grobheit des Verfahrens und zum anderen deshalb, weil die fertigen Konstruktionen oft nicht derartig beansprucht bzw. überhaupt nicht angeschnitten werden dürfen. Diese Überlegung führte dazu, dass in den Beton noch im rohen Zustand verschieden ausgebildete Dorne eingebettet werden und aus der zum Herausreissen erforderlichen Kraft auf die mechanischen Eigenschaften des Betons gefolgert wird. (US-A 4 103 540; GOST 21 243 75, Betony Opredelenje protschnosti metodom otrywa so skalywanijen, 1976 Isd. standartow, Moskau).

Die hiermit gewonnenen Erfahrungen waren nicht eindeutig günstig, da der Bruchquerschnitt beim Herausziehen des Dornes dem Zufall unterworfen und damit unterschiedlich war. So wurde zwar die Kraft sorgfältig gemessen, man erhielt jedoch trotzdem keine zuverlässigen Ergebnisse, da der Bruchquerschnitt nie ganz genau bestimmt werden konnte.

Als gegenüber dem Vorstehenden besser werden Verfahren angesehen, bei denen aus dem Poreninhalt und dem Zement-Wasser-Faktor auf die mechanischen Eigenschaften gefolgert wird (DD-A 102 043). Auf mehr oder weniger ähnliche Überlegungen stützen sich Schnellverfahren zur Festigkeitsbestimmung, wie sie aus den CA-A 2 607 919, US-A 3 974 679 und FR-A 2 323 149 bekannt sind. Diese haben jedoch den gemeinsamen Nachteil, dass die Unsicherheit der Ausgangsdaten eine Unsicherheit bezüglich der Folgerungen aus den Prüfungsergebnissen verursacht.

Gemäss DE-A 1 917 242 und 1 917 730 sowie US-A 3 176 043 wird das Probestück mit der zu prüfenden Betonkonstruktion zusammen gegossen. Hier werden sog. Probekerne mit dem zu prüfenden Beton zusammengegossen, nach dem Erstarren des Betons aus diesem herausgehoben und anschliessend durch eine Prüfmaschine bis zum Bruch belastet.

Bei letzterem Verfahren erwies sich die Ausführung als günstig, bei der in das Betonelement doppelwandige, teleskopartig herausziehbare Hülsen eingebettet werden. Hierbei besteht jedoch immer noch eine Unsicherheit hinsichtlich des Bruchquerschnittes, wodurch die gewonnenen Ergebnisse schwer miteinander vergleichbar sind.

Es sind ferner Verfahren bekannt, bei denen das Probestück aus dem erstarrten Beton nachträglich herausgerissen und aus der Bruchkraft auf die mechanischen Eigenschaften geschlossen wird (US-A 3 861 201 und AT-A 320 313). Das Verfahren dient zur Bestimmung der Festigkeitsparameter von Beton und anderen nachträglich erstarrenden Massen, wobei in die Masse Probekörper verschiedener Form eingebettet und nach dem Erstarren aus der Masse herausgerissen werden.

Dieses Verfahren hat jedoch den Nachteil, dass das so erhaltene Ergebnis nicht direkt die Zugfestigkeit ergibt, sondern nur die fiktive Bruchfestigkeit, bei der eine Reihe von anderen Parametern, z.B. die Druckfestigkeit, die Biege-Zugfestigkeit und sogar die Scherfestigkeit des Betons mit eine Rolle spielen. Demzufolge können die verschiedenen Betonsorten qualitativ schwer miteinander verglichen werden.

Aus der US-A 3 541 845 ist ferner ein Prüfverfahren bekannt, das zur Festigkeitsbestimmung gegossener und später erstarrender Massen dient. Die Zuverlässigkeit des Verfahrens ist ungünstiger als die der vorher erwähnten, da hierbei die herausgerissenen Probekörper gleichzeitig auf Scherung und Biegung beansprucht werden. Diese Beanspruchungen können unter den verschiedenen örtlichen Bedingungen bei hohem Zufallsanteil vorkommen und eventuell die dominierende Rolle spielen.

Die US-A 3 595 072 beschreibt eine ausdrücklich zur Prüfung von Beton- und Stahlbetonkonstruktionen dienende Einrichtung, deren Nachteil darin besteht, dass kein enger und direkter Zusammenhang zwischen den Ergebnissen und der sog. Würfelfestigkeit des Betons besteht.

Mit einem bekannten Verfahren gemäss der FR-A 2 313 677 kann ausschliesslich die Biegefestigkeit bestimmt werden, wobei örtliche, durch die Verarbeitung und andere Einflüsse bedingte Fehler eine grosse Rolle spielen, die Messergebnisse weit streuen und die Vergleichbarkeit der erhaltenen Ergebnisse in Frage stellen.

Der Erfindung liegt die Aufgabe zugrunde, über die eingebauten Konstruktionen direkt eine Festigkeitsinformation zu geben, wobei die Prüfung kostengünstig sowie schnell und einfach durchführbar sein soll. Die so durchgeführten Prüfungen sollen eine hohe Prüfsicherheit und Zuverlässigkeit mit geringer Streuung ergeben.

Dabei liegt der Erfindung die Erkenntnis zugrunde, dass eine direkte Information über das eingebaute Betonelement bzw. die Betonkonstruktion und gleichzeitig ein mit der Würfelfestigkeit des Betons eindeutig in Korrelation stehendes Messergebnis dann erhalten wird, wenn mit dem Aufbau der Prüfeinrichtung erzwungen wird, dass das Abreissen des Betons durch die Zugkraft immer an derselben Stelle und bei einem bestimmten Querschnitt erfolgt. Damit werden nämlich nicht nur die grossen Streuungen der vorher erwähnten Verfahren ausgeschaltet, sondern es wird auch eine einfache, leicht bedienbare Einrichtung zur Qualitätskontrolle geschaffen, die ohne besondere Ausbildung bedient werden kann.

Ausgehend von einer Einrichtung der eingangs genannten Art, wie sie durch die zitierte Druckschrift GOST 21 243 75 bekannt ist, ist diese Aufgabe erfindungsgemäss dadurch gelöst, dass das Einlegeelement als hohler Reissbecher ausgebildet ist, dass der an beiden Enden offene Reissbecher einen sich von der Betonoberfläche nach dem Inneren des Betons hin verjüngenden Mantel aufweist und dass die Achse des Reissbechers senkrecht zur Betonoberfläche angeordnet ist. Weiterbildungen der Erfindung sind in den Unteransprüchen beschrieben.

Die durch die Erfindung erreichten Vorteile sind im wesentlichen darin zu sehen, dass das durch den Reissbecher im Beton definierte Betonstück durch die Zugkraft immer am gleichen und genau definierten Querschnitt herausreisst.

Ein weiterer Vorteil besteht darin, dass die Ausbruchprobe immer aus dem einzubauenden oder dem schon eingebauten Konstruktionselement genommen werden kann, also die Verarbeitungs- und Reifungsbedingungen der Probe unbedingt mit denen des Konstruktionselementes gleich sind. Das herausgerissene Stück ist klein und ästhetisch nicht störend, so dass es auch unausgegossen gelassen werden kann. Andererseits ist jedoch bei sichtbaren Oberflächen auch seine Ausfüllung mit Hilfe von Reparaturmasse leicht möglich.

Das Herausreissen des Betonstückes kann mit Hilfe einer hydraulischen oder mechanischen Kraftmessung verbunden werden, die sehr einfach und mit einer sehr grossen Messgenauigkeit durchgeführt werden kann. Die Kraft kann auch mit Hilfe eines Dehnungsmessstempels gemessen werden, wobei im Bedarfsfall die Verbindung mit einer Digitalanzeige möglich ist. Ein weiterer Vorteil besteht darin, dass der Bruchquerschnitt verhältnismässig tief im Beton sitzt, so dass das Messergebnis durch Oberflächenfehler bzw. Veränderungen der Oberfläche nicht beeinflusst wird.

Wie sich herausgestellt hat, liegen ausserdem die Kosten einer Prüfung nach der Erfindung bei etwa einem Achtel der Kosten der bekannten Verfahren, wobei gleichzeitig deren dargestellte Nachteile beseitigt sind.

Die Erfindung wird nachfolgend anhand von Ausführungsbeispielen näher erläutert, die in der Zeichnung dargestellt sind. In der Zeichnung zeigen:

Fig. 1 einen Längsschnitt durch eine erfindungsgemässe Prüfeinrichtung;

Fig. 2 einen Längsschnitt durch eine andere Ausführung einer Prüfeinrichtung;

Fig. 3 einen Längsschnitt durch eine dritte Ausführung einer Prüfeinrichtung;

Fig. 4 eine Abwandlung des Stützelementes;

Fig. 5 einen Reissbecher im Schnitt und

Fig. 6 die Schnittansicht der Einzelheit A in Fig. 5.

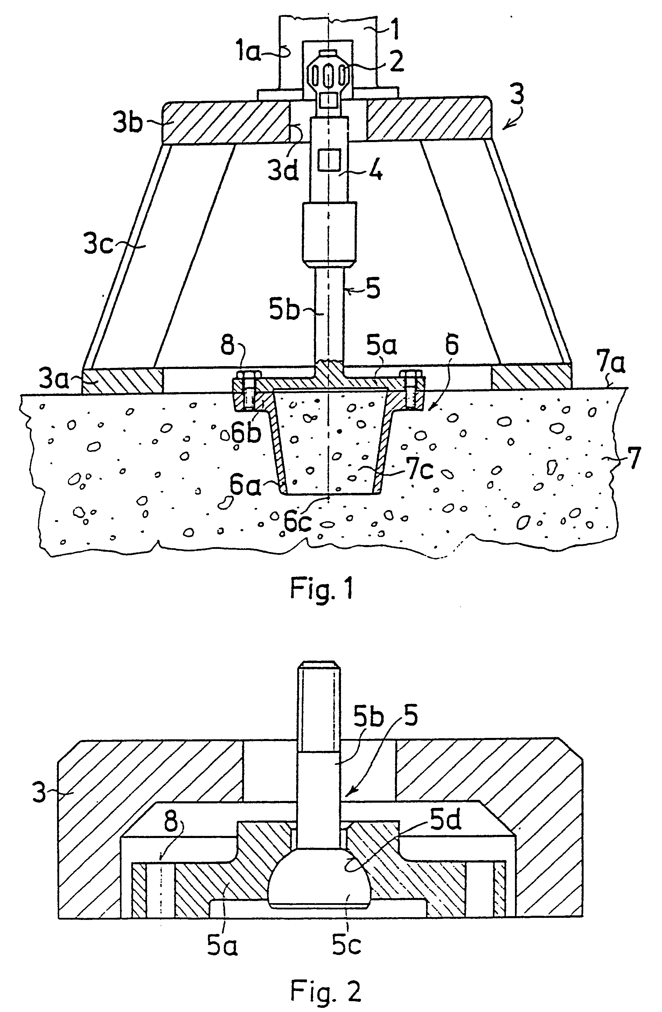

Fig. 1 veranschaulicht einen Längsschnitt eines im Beton 7 sitzenden Reissbechers 6, dessen kegelstumpfförmiger Mantel 6a einen sich von der oberen Fläche 7a des Betons 7 nach dessen Innerem hin verjüngenden Querschnitt hat. Der vorteilhafterweise aus einem Stück gegossene Mantel 6a weist einen Kragen 6b auf, der mittels zur Längsachse 6c des Reissbechers 6 vorteilhaft parallel angeordneter Schrauben 8 fest, jedoch lösbar mit einem Ausziehkopf 5 verbunden ist.

Der Ausziehkopf 5 besteht bei der Ausführungsform gemäss Fig. 1 aus einer Scheibe 5a und einem einstückig damit verbundenen Stiel 5b. Die Scheibe 5a und der Kragen 6b haben miteinander fluchtende Bohrungen, in die die Schrauben 8 eingesetzt werden können. Zwischen Ausziehkopf 5 und einem an sich bekannten Kraftmessorgan 1 ist ein Verbindungselement 4 mit einem Anschlussglied 2 angeordnet, das der Kraftübertragung zwischen dem Kraftmessorgan 1 und dem Ausziehkopf 5 dient.

Das Verbindungselement 4 kann mit dem Ausziehkopf 5 lösbar, z.B. über ein Gewinde oder einen Bajonettverschluss, verbunden werden. Das Anschlussglied 2 wird vorteilhafterweise gegenüber dem Verbindungselement 4 verdrehbar ausgebildet und es wird zu dessen Aufnahme das Kraftmessorgan 1 vorteilhafterweise mit einem Anschlussitz 1a versehen.

Zur Abstützung des Kraftmessorgans 1 und zu dessen Stabilisierung gegenüber der Betonkonstruktion dient ein Stützgestell 3. Bei der Ausführungsform nach Fig. 1 besteht das Stützgestell 3 aus einem auf der Oberfläche 7a des Betons 7 aufsitzenden Fussring 3a und einer das Aufsetzen des Kraftmessorgans 1 ermöglichenden Stützscheibe 3b sowie diese Teile miteinander verbindenden Füssen 3c. Ein Betonstück (Probe) im Inneren des Reissbechers 6 ist mit dem Bezugszeichen 7b versehen.

Die Füsse 3c können auch durch einen zusammenhängenden «Rock» in Kegelstumpf- oder Prismenstumpfform ersetzt werden. In jedem Falle ist es natürlich erforderlich, dass die Stützscheibe 3b eine zentrale Öffnung 3d besitzt, durch die das Verbindungselement 4 gesteckt werden kann.

In Fig. 2 ist ein anderes Ausführungsbeispiel des Ausziehkopfes 5 zu sehen, dessen Scheibe 5a einen Sitz 5d mit einer konkaven Kegelstumpfform besitzt. Der untere Teil 5c mit einer konkaven Kegelstumpfform des Stieles 5b des Ausziehkopfes 5 wird im Sitz 5d kugelgelenkartig aufgenommen, wodurch eine kleine Relativbewegung bzw. Winkelverdrehung zwischen der Scheibe 5a und dem Stiel 5b ermöglicht wird.

Aufgrund dieser Ausführung erfolgt das Herausreissen des Betonstückes 7b immer unter reiner Zugkraft. Dadurch wird der Reissbecher 6 nie quer verspannt und es erhält das Messergebnis keine verfälschende, exzentrische Belastung.

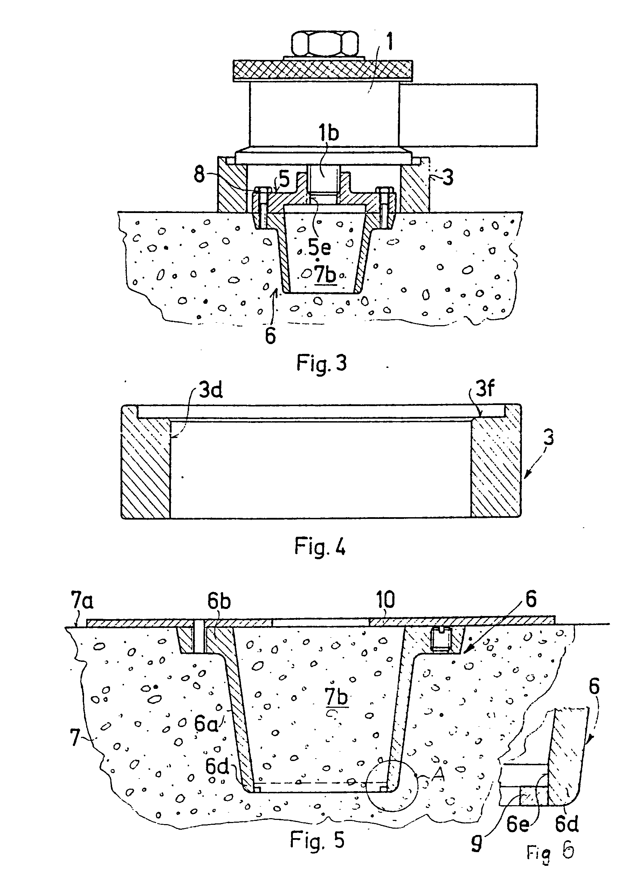

Fig. 3 zeigt eine weitere Ausführung der erfindungsgemässen Einrichtung, bei der die Zugkraft vom Kraftmessorgan 1 über ein Gewinde auf den Ausziehkopf 5 übertragen wird. Der Ausziehkopf 5 weist eine Gewindebohrung 5e auf, in die ein Gewindebolzen 1b des Kraftmessorgans 1 eingreift.

Fig. 4 zeigt das Stützelement 3, das als Stützring ausgebildet ist, in vergrössertem Massstab. Der Stützring 3 ist mit einer zentralen Öffnung 3d versehen. Ausserdem weist der Stützring 3 einen Rand 3f auf, der dem Aufsetzen des Kraftmessorgans 1 dient.

Zur Prüfung wird der Reissbecher 6 in die zu prüfende Betonkonstruktion bzw. das Betonelement an der ausgewählten Stelle bei noch rohem, unerstarrtem Zustand des Betons eingesetzt. Es ist dabei zweckmässig, auf den Kragen 6b eine Deckplatte 10 aufzusetzen (gemäss Fig. 5), damit der rohe Beton in die Gewindebohrungen des Kragens 6b nicht eindringen kann.

Eine zusätzliche Aufgabe der Deckplatte 10 besteht darin, dass es mit ihrer Hilfe leichter ist, die obere Ebene des Kragens 6b des Reissbechers 6 parallel zur Oberfläche 7a des Betons 7 einzustellen. Es ist weiterhin vorteilhaft, wenn die äussere Seite des Mantels 6a des Reissbechers 6 in an sich bekannter Weise mit einem Antihaftmittel, z.B. Schmierfett oder Öl, überzogen wird, um das Anhaften des Betons zu verhindern. Dadurch könnte nämlich das Messergebnis negativ beeinflusst werden.

Nach dem Erstarren des Betons wird zu einem vorher festgelegten Zeitpunkt die Deckplatte 10 vom Reissbecher 6 entfernt und es wird der Ausziehkopf 5 aufgesetzt. Durch Einsetzen der Schrauben 8 und durch deren Anziehen wird eine kraftschlüssige Verbindung zwischen dem Ausziehkopf 5 und dem Reissbecher 6 hergestellt. Danach wird das Kraftmessorgan 1 über das Verbindungselement 4 und das Anschlussglied 2 angeschlossen. Durch Betätigung des Kraftmessorgans 1 wird die Zugkraft langsam und stufenlos solange gesteigert, bis das Betonstück 7b aus dem Beton 7 herausgerissen wird.

Gemäss der in Fig. 6 dargestellten Variante des Reissbechers 6 kann dieser an seinem unteren Rande 6d versehen werden, deren Achse koaxial mit der Achse des Reissbechers 6 ist. Dadurch wird erreicht, dass das Betonstück 7b mit Sicherheit entlang dem Rand 6d abreisst. In einigen Fällen können die Bedingungen für das Herausreissen dadurch verbessert werden, dass innerhalb der Mantelfläche 6e ein elastischer Ring 9, z.B. aus Kunststoff oder Stahl, untergebracht ist.

Erfahrungsgemäss bedeutet der Quotient aus der Kraft im Moment des Herausreissens und dem Reissquerschnitt einen eindeutig charakteristischen Festigkeitswert für den Beton. Das ist hauptsächlich dadurch erreicht, dass das kegelstumpfförmige Betonstück 7b immer an einer senkrecht zur Längsachse gelegenen Fläche herausreisst.

Die Messgenauigkeit der erfindungsgemässen Prüfeinrichtung erfüllt selbst die anspruchsvollsten Bedingungen. Sie ist in der Lage, die herkömmlichen Würfelbruchverfahren zu ersetzen. Sie ermöglicht es, an mehreren Punkten der Konstruktion Messungen durchzuführen, wodurch die Sicherheit der Qualitätskontrolle steigt und durch diese Erhöhung der Sicherheit in der Qualitätskontrolle zementsparendere Konstruktionen hergestellt werden können. Die Reissbecher 6 können im Beton 7 beliebig lange Zeit stehenbleiben, da sie aus rostfreiem Stahl hergestellt werden können. Somit können auch zu einem späteren Zeitpunkt an der Betonkonstruktion Messungen durchgeführt werden, womit die Alterungseigenschaften des Betons verfolgt werden können.

## Patentansprüche

1. Einrichtung zur Bestimmung der Festigkeit von Beton (7) mit einem auf die Betonoberfläche (7a) aufsetzbaren Gestell (3), einer Belastungseinheit für ein mittels eines Verbindungselementes (4) mit der Belastungseinheit verbundenes, in den zu prüfenden, noch nicht erhärteten Beton (7) einzusetzendes Einlegeelement (6), sowie mit einem Kraftmessorgan (1), dadurch gekennzeichnet, dass das Einlegeelement (6) als hohler Reissbecher (6) ausgebildet ist, dass der an beiden Enden offene Reissbecher einen sich von der Betonoberfläche nach dem Inneren des Betons hin verjüngenden Mantel (6a) aufweist und dass die Achse (6c) des Reissbechers senkrecht zur Betonoberfläche (7a) angeordnet ist.

2. Einrichtung nach Anspruch 1, dadurch gekennzeichnet, dass der Reissbecher (6) kegelstumpfförmig ausgebildet ist.

3. Einrichtung nach einem der vorhergehenden Ansprüche, dadurch gekennzeichnet, dass das betonoberseitige Ende des Reissbechers (6) einen Kragen (6b) zum Anschluss eines mit dem Verbindungselement (4) gekoppelten Ausziehkopfes (5) aufweist.

4. Einrichtung nach Anspruch 3, dadurch gekennzeichnet, dass der Kragen (6b) des Reissbechers (6) mit dem Ausziehkopf (5) lösbar verbunden ist.

5. Einrichtung nach Anspruch 4, dadurch gekennzeichnet, dass die Verbindung durch Schrauben (8) gebildet ist.

6. Einrichtung nach einem der Ansprüche 3 bis 5, dadurch gekennzeichnet, dass der Ausziehkopf (5) aus einer sich an den Kragen (6b) des Reissbechers (6) anschliessenden Scheibe (5a) sowie einem mit der Scheibe fest verbundenen Stiel (5b) besteht.

7. Einrichtung nach einem der Ansprüche 3 bis 5, dadurch gekennzeichnet, dass der Ausziehkopf (5) eine sich an den Kragen (6b) des Reissbechers (6) anschliessende Scheibe (5a) sowie einen mit der Scheibe (5a) relativ verdrehbar verbundenen Stiel (5b) besitzt.

8. Einrichtung nach Anspruch 7, dadurch gekennzeichnet, dass der Stiel (5b) des Ausziehkopfes (5) in einem konvexen Kugelstumpf (5c) endet und die Scheibe (5a) einen konkaven, kegelstumpfförmigen Sitz (5d) für den Kugelstumpf (5c) besitzt.

9. Einrichtung nach einem der vorhergehenden Ansprüche, dadurch gekennzeichnet, dass der von der Betonoberfläche (7a) abgewandte Rand (6d) des Reissbechers (6) eine zylindrische innere Mantelfläche (6e) besitzt, deren Achse zur Achse (6c) des Reissbechers (6) parallel ist, und dass innerhalb der Mantelfläche (6e) ein elastischer Ring (9) untergebracht ist.

10. Einrichtung nach einem der vorhergehenden Ansprüche, dadurch gekennzeichnet, dass das Stützgestell (3) aus einem auf der Oberfläche (7a) des zu prüfenden Betons (7) aufliegenden Fussring (3a), einer zum Aufsetzen des Kraftmessorgans (1) dienenden Stützscheibe (3b) sowie Zwischenstücken zwischen dem Fussring (3a) und der Stützscheibe (3b), beispielsweise Füssen (3c), besteht.

11. Einrichtung nach einem der Ansprüche 1 bis 9, dadurch gekennzeichnet, dass das Stützgestell (3) als ein Stützring ausgebildet ist, der mit einem Rand (3f) zum Aufsetzen des Kraftmessorgans (1) sowie einer zentralen Öffnung (3d) versehen ist.

**Claims**

1. Installation to determine the resistance of concrete (7) with a stand (3) which is able to be placed onto the concrete surface (7a), a loading unit for an insertion element (6) which is connected with the loading unit by means of a connecting element (4) and which is to be inserted into the concrete (7) to be tested and which is not yet set, and also with a dynamometer member (1), characterized in that the insertion element (6) is constructed as a hollow breaking bucket (6), that the breaking bucket, which is open at both ends, has a shell (6a) tapering from the concrete surface to the interior of the concrete, and that the axis (6c) of the breaking bucket is arranged vertically to the concrete surface (7a).

2. Installation according to Claim 1, characterized in that the breaking bucket (6) is constructed in the form of a truncated cone.

3. Installation according to one of the preceding claims, characterized in that the end of the breaking bucket (6) on the upper side of the concrete has a collar (6b) for the connection of a withdrawal head (5) coupled with the connecting element (4).

4. Installation according to Claim 3, characterized in that the collar (6b) of the breaking bucket (6) is detachably connected with the withdrawal head (5).

5. Installation according to Claim 4, characterized in that the connection is formed by screws (8).

6. Installation according to one of Claims 3 to 5, characterized in that the withdrawal head (5) consists of a plate (5a) joining on to the collar (6b) of the breaking bucket (6) and of a shaft (5b) which is firmly connected with the plate.

7. Installation according to one of Claims 3 to 5, characterized in that the withdrawal head (5) has a plate (5a) joining on to the collar (6b) of the breaking bucket (6) and also has a shaft (5b) which is connected with the plate (5a) so as to be relatively rotatable.

8. Installation according to Claim 7, characterized in that the shaft (5b) of the withdrawal head (5) terminates in a convex truncated sphere (5c) and the plate (5a) has a concave seat (5d), in the shape of a truncated sphere, for the truncated sphere (5c).

9. Installation according to one of the preceding claims, characterized in that the rim (6d) of the breaking bucket (6) facing away from the concrete surface (7a) has a cylindrical inner shell surface (6e), the axis of which is parallel to the axis (6c) of the breaking bucket (6), and that an elastic ring (9) is accommodated within the shell surface (6e).

10. Installation according to one of the preceding claims, characterized in that the supporting stand (3) consists of a base ring (3a) resting on the surface (7a) of the concrete (7) which is to be tested, of a protective plate (3b) serving for the placement of the dynamometer member (1) and intermediate pieces between the base ring (3a) and the protective plate (3b), for example feet (3c).

11. Installation according to one of Claims 1 to 9, characterized in that the supporting stand (3) is constructed as a supporting ring, which is provided with a rim (3f) for the placement of the dynamometer member (1) and with a central opening (3d).

**Revendications**

1. Dispositif pour la détermination de la résistance du béton (7), comprenant un chevalet (3) que l'on peut poser sur la surface (7a) du béton, une unité de charge prévue pour un élément d'insertion (6) relié à l'unité de charge au moyen d'un élément de liaison (4) et qui doit être encastré dans le béton (7) à contrôler, non encore durci, ainsi qu'un organe dynamométrique (1), caractérisé en ce que l'élément d'insertion (6) est constitué par un godet de rupture creux (6), en ce que le godet de rupture ouvert à ses deux extrémités présente une paroi latérale (6a) qui se rétrécit de la surface du béton vers l'intérieur du béton, et en ce que l'axe (6c) du godet de rupture est disposé perpendiculairement à la surface (7a) du béton.

2. Dispositif selon la revendication 1, caractérisé en ce que le godet de rupture (6) est de forme tronconique.

3. Dispositif selon l'une des revendications précédentes, caractérisé en ce que l'extrémité côté surface du béton du godet de rupture (6) présente une collerette (6b) servant à raccorder une tête d'extraction (5) couplée à l'élément de liaison (4).

4. Dispositif selon la revendication 3, caractérisé en ce que la collerette (6b) du godet de rupture (6) est assemblée à la tête d'extraction (5) par une liaison démontable.

5. Dispositif selon la revendication 4, caractérisé en ce que la liaison est constituée par des vis (8).

6. Dispositif selon l'une des revendications 3 à 5, caractérisé en ce que la tête d'extraction (5) est composée d'un disque (5a) qui se raccorde à la collerette (6b) du godet de rupture (6), ainsi que d'une tige (5b) assemblée rigidement au disque (5a).

7. Dispositif selon l'une des revendications 3 à 5, caractérisé en ce que la tête d'extraction (5) possède un disque (5a) qui se raccorde à la collerette (6d) du godet de rupture (6), ainsi qu'une tige (5b) qui peut tourner par rapport au disque (5a).

8. Dispositif selon la revendication 7, caractérisé en ce que la tige (5b) de la tête d'extraction (5) se termine par une calotte de sphère convexe (5c) et que le disque (5a) présente une portée concave tronconique (5d) pour la calotte de sphère convexe (5c).

9. Dispositif selon l'une des revendications précédentes, caractérisé en ce que le bord (6d) du godet de rupture (6) qui est à l'opposé de la surface (7a) du béton possède une surface latérale interne cylindrique (6e) dont l'axe est parallèle à l'axe (6c) du godet de rupture (6) et en ce que, à l'intérieur de la surface latérale (6e), est logée une bague élastique (9).

10. Dispositif selon l'une des revendications précédentes, caractérisé en ce que le chevalet d'appui (3) est composé d'une couronne de pied (3a) qui se pose sur la surface (7a) du béton à contrôler (7), d'un disque d'appui (3b) servant à poser l'organe dynamométrique (1), ainsi que de pièces intercalaires situées entre la couronne de pied (3a) et le disque d'appui (3b), par exemple, de pieds (3c).

11. Dispositif selon l'une des revendications 1 à 9, caractérisé en ce que le chevalet d'appui (3) est constitué par une bague d'appui qui est munie d'un bord (3f) destiné à recevoir l'organe dynamométrique (1), ainsi que d'une ouverture centrale (3d).

Fig. 1

Fig. 2

Fig. 3

Fig. 4

Fig. 5

Fig 6